# EUROPEAN PATENT SPECIFICATION

(11) **EP 0 793 988 B1**
(45) Date of publication and mention of the grant of the patent: **15.09.2004**
(21) Application number: 97103007.7
(22) Date of filing: 25.02.1997
(51) Int. Cl.: B01D 24/00, B01D 46/24

(54) **Motorized sweeper**
Motorisierte Kehrmaschine
Balayeuse motorisé

(30) Priority: 06.03.1996 IT MI960430
(43) Date of publication of application: 10.09.1997
(73) Proprietor: INTERPUMP CLEANING S.p.A., Vaiano Cremasco (CR) (IT)
(72) Inventor: Gansow, Peter, 58089 Hagen (DE)
(74) Representative: Marietti, Giuseppe

(56) References cited:
- EP-A- 0 169 330
- US-A- 3 898 414

## Description

The present invention relates to a motorized sweeper. The motorized sweepers are used, for instance, for the cleaning of the road mantle, of the flooring in public buildings, factories, railways stations, etc.

These machines generally comprise one or more rotating elements in contact with the ground, a system of dust aspiration, a filtration system and a chamber to collect the dust.

Various types of filters for motorized sweepers are known in the art. A first type of filter consists of one or more panels of paper which are folded like an accordion to increase the filtering surface. A second type consists of bags containing filter material, and a third type comprises vertically disposed cylindrical cartridges inside of which is arranged an accordion-folded filtering element.

A first problem of the known filters is their excessive encumbrance. This results in the present motorized sweepers necessarily comprising a large bay to house the filter. This bay occupies a large part of the volume of the machine, and almost completely separates the front part from the back part of the machine, in a such a way as to make it difficult to arrange other components and, in particular, the trunking for the exhaust gases produced by the motor. Furthermore, this results in the motor being necessarily lodged in a bay of reduced dimensions, behind the driving place with consequent heating and noise problems.

A second problem is cleaning the filter efficiently. Cleaning is effected by jolting the same filter by hand or by machine. For instance, in the case of the vertical cylindrical cartridges filter a system is used that involves striking repeatedly the cartridge with a hammer or vibrator. This method presents however the problem that the dirt tends to stay in the lower parts of the filter, causing a reduction of efficiency of up to 2/3 in a short time.

A further system is known for cleaning a panel filter for motorized sweeper by hand, using one or more combs attached to a frame, which are manually run along the surface of the panel.

EP-A-0169330 discloses a filter cleaning device comprising at least one rotary filter with outwardly directed projections and at least one impending means (tabs).The filter cartridge consists of a filter body in the form of a pleated cylinder. During function of this cleaning device, a contaminated gas is sucked into the inner part of the filtering casing and through the filter body to which the impurities adhere. The cleaned gas leaves the filtration device through a suction fan. When the filter cartridge is clogged by the impurities or the suction fan is stooped, the pressure below atmospheric changes in the inner space of the filter casing, which indicates that the filter should be cleaned. The filter cartridge is cleaned by means of starting an electric motor whereby the filter cartridge is rotated. Each projection of the filter body abuts against the tabs which cause that the projections shake off impurities collected on the outside of the filter material. The impurities shaken loose are tossed off the filter cartridge and fall down into a collector.

US-A-3,898,414 relates to a filter unit having a filter cartridge which comprises an inner perforated metal sleeve. In use the air containing smoke and fumes enters into the filter unit and passes through the porous cartridge to its bore and pipes to be exhausted. The porous filter cartridge thus filters out the particles from the air passed through it. When the cartridge becomes clogged or dirty, the filter should be cleaned by means of a crank arm rotated manually or by means of a motor. Said arm and motor make into rotation the tabs around the outside ofthe filter cartridge and cause the cake dusts to be dislodged from the cartridge and drop into dust sump.

The purpose of the present invention is to resolve the aforementioned problems by means of a motorized sweeper whose filter is of limited encumbrance and is easy to clean.

A further purpose of the present invention is to produce a motorized sweeper equipped with the aforesaid filter which would be less polluting, quieter, and more comfortable for the operator to use.

Such purpose is achieved by the present invention, which relates to a motorized sweeper having a filter comprising a filter element, substantially cylindrical in shape and folded like an accordion to form a multiplicity of fins, an aspirator and a low pressure chamber to store the dust collected, wherein a handle is provided that set said fins of said filtering element in relative movement with respect to at least one striker or a rigid or semirigid comb interfering with the fins, to effect the separation of the dust from said filtering element through the flexing and elastic return to position of the same fins
characterised in that said handle is connected to the filtering element in such a way that it enables both the manual rotation and the extraction of the filtering element from the machine.

According to a preferred embodiment of the present invention, the said filtering element has its axis of rotation in a substantially horizontal position and is set in rotation by a motor so that the fins of the filtering element knock against at least one fixed rigid or semirigid comb. In the cleaning phase, the said fins of the filtering element present themselves divergent and turned toward the refuse container, facilitating in this way the separation and collection of the dust.

The present invention relates to a motorized sweeper equipped with a filter , characterized by providing at least one corridor, terminating at the rear with respect to the driving position, for the disposal of the hot gases produced by the motor.

The invention presents different advantages compared to the present state of the art. Above all, knocking the fins of the filtering element against the combs allows the dust to be shaken from the same filter in a more efficient way compared to the known technique, with total elimination of the dust and without risk of partial clogging of the filter. That allows, as a consequence, the production of a filter with less encumbrance and, therefore, the production a motorized sweeper of smaller dimensions, and the endowment of the said machine of at least one corridor for disposal of the hot air produced by the motor, which vents in a position to the rear of the driving position or, in any case, far from it, making the vehicle more comfortable and silent; that further allows the provision of more space for the motor reducing the problems of overheating. Furthermore, the hot gases are released into the environment at a lower temperature and farther from the driving position, in a direction opposite to that of advancement of the machine, thus reducing the problems of heat and acoustic pollution.

The invention will now be described in more detail with reference to the drawings enclosed which are of an illustrative and not limitative nature, in which:
- figures 1.a and 1.b are respectively a side view and a frontal view, in section, of a preferred embodiment of the filter as used in a motorised sweeper according to the present invention;
- figure 2 is a side view in section of an alternative embodiment of the filter as used in a motorised sweeper according to the present invention;
- figure 3 is a partial view from the top in section of an another embodiment of a filter as used in a motorised sweeper according to the invention comprising two elements equipped with filters and a common aspirator, and
- figure 4 is a schematic view from the top of a motorized sweeper using the filter according to the present invention.

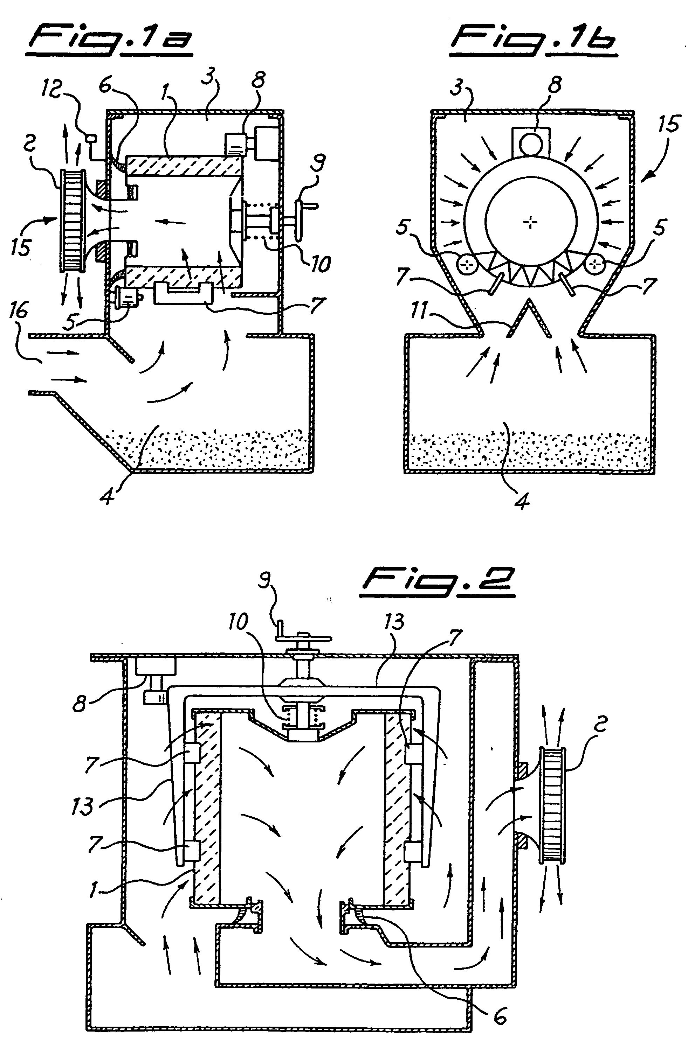

The figure 1.a shows a filter 15 for motorized sweepers, according to a preferred embodiment of the invention, seen in side section. The filtering element 1 comprises a surface of material apt to absorb the dust, folded like an accordion and substantially cylindrical in shape. The element 1 could be set in rotation by a motor 8, around a substantially horizontal axis, with the aid of supporting rollers 5. The element 1 is contained inside an upper low pressure chamber 3 set above the lower low pressure chamber 4, suited to the collection of dust; it is furthermore maintained in position by a pivot 10 and could be set in rotation manually if necessary, or removed from the machine, with the aid of the handle 9. On a side of the chamber 3 is arranged an external aspirator 2 and above this is fitted a low pressure sensor 12. Figure 1.a also shows a rigid comb 7 and the sealing gaskets 6 of the filtering element.

Figure 1.b shows the filter 15 in frontal section, demonstrating the presence of one or more combs 7, of support rollers 5 and of a separator wall 11.

During normal operation of the motorized sweeper, the fan 2 is in operation and sucks in air which enters the lower chamber 4 through a nozzle 16. In the larger part of the chamber 4 the speed of the air is reduced and the heavy particles contained in it are deposited on the bottom, while the light parts are retained by the filter. Finally the air exits through the fan 2. (The course followed by the air in the various embodiments of the present invention is shown by the arrows in the figures 1.a, 1.b, 2 and 3).

When it is necessary to clean the filter, the fan 2 is stopped, or the flow of aspiration is diverted and the filtering element 1 is set in rotation by the motor 8, or alternatively, manually using the handle 9. While the filtering element 1 rotates, the fins knock against the combs 7 and vibrate in such a way that the dust on them is flicked off and is deposited on the bottom of the chamber 4. The motor 8 can also be set in rotation automatically by means of the low-pressure sensor 12 which removes any possible clogging of the filter. Also in this case, during the rotation of the element 1, the fan 2 is stopped or the flow of aspiration is diverted. Furthermore, it is possible to provide a device to interrupt the relative rotation of said filtering element and of said comb in a position mutually different from the initial one, so that the filter is worn uniformly.

It is moreover possible to set in rotation the filtering element 1 at pre-set intervals of time while the machine is operating, actuating the motor 8 by means of a timer (not shown). The rotation of the filtering element 1 is then stopped after it has made a suitable number of fractions of rotation, expecially to arrive at a final position different to the initial one.

The cleaning of the filter, after the end of the utilization of the motorized sweeper, is then made by means of the motor 8, or manually, with the handle 9.

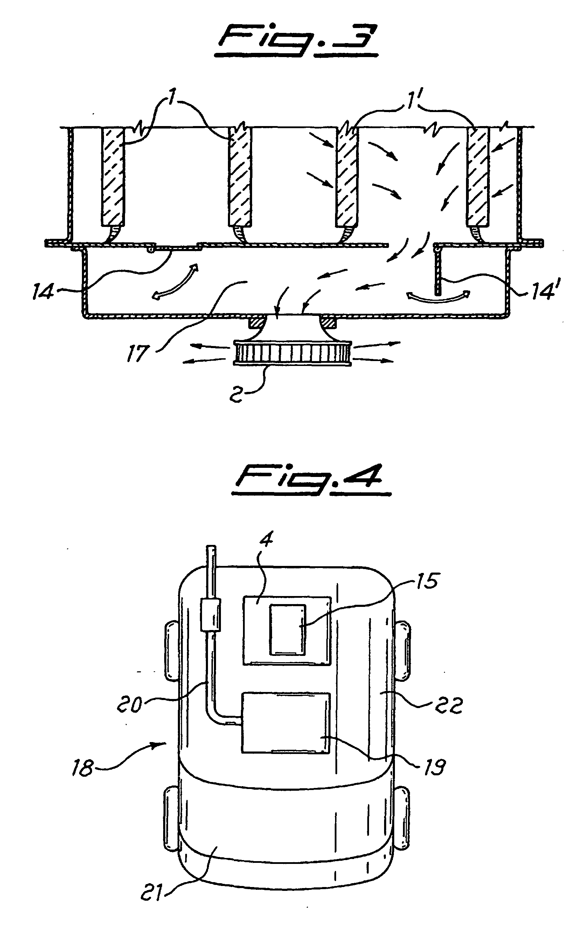

Figure 2 shows a side view in section of an alternative embodiment of the filter as used in a motorised sweeper according to the present invention, in which the cylindrical filtering element 1 has substantially vertical axis. Opposite to the embodiment previously described, the element 1 stays in fixed position during the operations of cleaning the filter, while the motor sets in rotation a frame 13 on which are solidly fitted the rigid or semirigid combs 7. The combs 7 knock against the fins of the element 1 and they provoke the separation of the dust retained in them. The rotation of the frame 13 can also be effected manually by means of the handle 9, which can also be used for the removal of the frame 13 and of the element 1.

An alternative embodiment of the present invention (not shown) provides for the employment of two or more filters in parallel, each endowed with its own low-pressure chamber and with its own fan. Naturally, when the cleaning of a filter is proceeded to, the aspiration of the corresponding fan is excluded.

Figure 3 shows a partial view from the top in section of a further embodiment of the filter , analogous to that just described, comprising two filtering elements 1 and 1' equipped with a common aspirator 2. In this case there is only one chamber 17 which allows the fluid communication between the elements 1 and 1' and there are shutters 14 and 14' that serve to isolate alternatively one of the two filtering elements 1 and 1', from the flow of inhaled air. Wherever for instance, it is necessary to clean the element 1, the shutter 14 is set in the closed position shown in figure 3, and the element 1 is set in rotation automatically and cleaned following the procedures previously described, while the fan 2 remains operating and the element 1' continues its filtering action since the shutter 14' stays open.

In the aforementioned cases in which two (or more) filtering elements in parallel are present, it is possible, with the aim of automatically clean the filtering elements of the motorized sweeper, to set in rotation at pre-set intervals of time one of the filtering elements, by means of a starting signal from a timer, while at the same time the corresponding fan is stopped (or, as in the case of figure 3, while the shutter, corresponding to the filtering element which is set in motion, is closed). During the aforementioned cleaning operations relative to one of the filtering elements, the other element (or possibly the others, if present) continues to perform its filtering action.

Figure 4 shows a schematic view from the top of a motorized sweeper 18 according to the invention equipped with a motor 19 and the related trunking 20 for the exhaust gases; provision is also made for a filter 15. The system of cleaning previously described allows maintenance of a high level of efficiency of the filter 15 over the course of time, thus making it possible to fit a filter 15 of reduced dimensions on the machine 18. The reduced area of the filter 15 and of its low-pressure chamber 4, allows a corresponding reduction in the dimensions of the motorized sweeper 18.

Furthermore, in the motorized sweeper 18 according to the invention it is possible to lodge said motor 19 and said filter 15 inside a single bay 22. Alternatively, it is possible to arrange the filter 15 on the outside of the aforesaid bay, in as much as it has its own independent chamber which could be connected with the aspirator and the dust unloaded by means of suitable conduits. Both these solutions allow more space to house the motor 19 and its own cooling needs and they offer the possibility of positioning the motor 19 farther from the driving position 21 of the motorized sweeper 18, with consequent benefits in terms of reduced noise and increased driving comfort. The reduced dimensions of the filter finally allow a corridor for the disposal of the hot air from the motor, whose outflow is favoured also by the free spaces inside the filtering system. The air is therefore introduced into the environment at a lower temperature and in a farther position from the driver. To favor further the aforesaid rear outflow of the air, in a direction opposite to that of the progress of the vehicle, it is provided that the terminal part of the body of the vehicle has the form substantially of a truncated-cone, with the larger part disposed in correspondence of the rear part of the machine.

## Claims

1. A motorised sweeper (18) having a filter (15) comprising a filtering element (1), substantially cylindrical in shape and folded like an accordion to form a multiplicity of fins, an aspirator (2) and a low-pressure chamber (4) for the collection of dust, wherein a handle is provided that sets said fins of filtering element (1) in relative movement with respect to at least one striker or a rigid or semirigid comb (7) which interfere with the fins, to effect the separation of the dust from said filtering element through flexing and elastic return to position of the same fins, **characterised in that** said handle (9) is connected to the filtering element (1) in such a way that it enables both the manual rotation and extraction of the filtering element(1) from the machine.

2. Motorised sweeper (18) according to claim 1, **characterised in that** said filtering element(1) having an axis of rotation in a substantially horizontal position and being set in rotation by a motor (8) so that the fins of the filtering element (1) knock against at least one rigid or semirigid fixed comb (7).

3. Motorised sweeper (18) according to claim 1, **characterised in that** said cylindrical filtering element has an axis substantially vertical and is in a fixed position while a motor (8) sets in rotation a frame on which at least two rigid or semirigid combs (7) are solidly fitted.

4. Motorised sweeper (18) according to claim 3, **characterised in that** said rotatable frame is connected to said handle (9) for manual rotation and for extraction of the group composed of said frame and said cylindrical filtering element.

5. Motorised sweeper (18) according to any of the preceding claims, **characterised in that** it comprises two filtering elements (1) arranged in parallel and being equipped with a common aspirator (2) and with means (14, 14') of alternatively isolating from the aspired air flow one of the two filtering elements (1).

6. Motorised sweeper (18) according to any of the preceding claims, **characterised in that** it comprises a low-pressure sensor (12) to furnish a starting signal to said motor and a simultaneous stop signal of the flow of air for said aspirator (2).

7. Motorised sweeper (18) according to anyone of claims 1, 2, 5 or 6, **characterised in that** a device is provided to interrupt the relative rotation of said filtering element (1) and said comb (7) in a final position mutually different from the initial one.

8. Motorised sweeper (18) according to claim 7, **characterised in that** it comprises a timer to send a starting signal to said motor (8) during the filtering operation for a pre-set number of fractions of rotation.

9. Motorised sweeper (18) according to any of the preceding claims, **characterised in that** at least one corridor is provided which terminated at the rear with respect to the driving position, for disposal of the hot air produced by the motor (19).

10. Motorised sweeper (18) according to claim 9, **characterised in that** said motor (19) and said filter (15) are lodged inside a single bay (22).

11. Motorised sweeper (18) according to claim 9, **characterised in that** said filter (15) is lodged outside of said bay (22).

## Patentansprüche

1. Ein motorisierter Kehrer (18) mit einem Filter (15), umfassend ein Filterelement (1), das eine im wesentlichen zylindrische Form aufweist und wie ein Akkordeon gefaltet ist, um eine Vielzahl von Lamellen zu bilden, einer Saugpumpe (2) und einer Niederdruckkammer (4) zum Auffangen des Staubs, wobei ein Griff bereitgestellt ist, der die Lamellen des Filterelements (1) in eine relative Bewegung bezüglich wenigstens eines Abstreifers oder eines festen oder halbfesten Kamms (7) versetzt, der die Lamellen so beeinflußt, dassder Staub vom Filterelement durch Verbiegen und elastisches Rückfedem der Lamellen abgetrennt wird, **dadurch gekennzeichnet, dass** der Griff (9) so mit dem Filterelement (1) verbunden ist, dass er manuelle Drehung sowie Herausziehen des Filterelements (1) aus der Maschine ermöglicht.

2. Motorisierter Kehrer (18) nach Anspruch 1, **dadurch gekennzeichnet, dass** das Filterelement (1) eine Drehachse in einer im wesentlichen horizontalen Position aufweist und von einem Motor (8) in Drehung versetzt wird, so dass die Lamellen des Filterelements (1) gegen wenigstens einen festen oder halbfesten befestigten Kamm (7) schlagen.

3. Motorisierter Kehrer (18) nach Anspruch 1, **dadurch gekennzeichnet, dass** das zylindrische Filterelement eine im wesentlichen vertikale Achse aufweist und sich in einer festen Position befindet, während der Motor (8) einen Rahmen in Drehung versetzt, auf dem wenigstens zwei feste oder halbfeste Kämme (7) fest angebracht sind.

4. Motorisierter Kehrer (18) nach Anspruch 3, **dadurch gekennzeichnet, dass** der drehbare Rahmen zur Drehung von Hand und zum Herausziehen der aus dem Rahmen und dem zylindrischen Filterelement zusammengesetzten Gruppe mit dem Griff (9) verbunden ist.

5. Motorisierter Kehrer (18) nach einem der vorstehenden Ansprüche, **dadurch gekennzeichnet, dass** er zwei Filterelemente (1) umfaßt, die parallel angeordnet und mit einer gemeinsamen Saugpumpe (2) sowie mit Hilfsmitteln (14, 14') zur wechselweisen Trennung eines der beiden Filterelemente (1) vom angesaugten Luftstrom ausgestattet sind.

6. Motorisierter Kehrer (18) nach einem der vorstehenden Ansprüche, **dadurch gekennzeichnet, dass** er einen Niederdruckfühler (12) umfaßt, um ein Startsignal an den Motor und gleichzeitig ein Luftstrom-Stoppsignal für die Saugpumpe (2) zu geben.

7. Motorisierter Kehrer (18) nach einem der Ansprüche 1, 2, 5 oder 6, **dadurch gekennzeichnet, dass** eine Vorrichtung bereitgestellt ist, um die relative Drehung des Filterelements (1) und des Kamms (7) in einer Endposition zu unterbrechen, die jeweils von der Anfangsposition verschieden ist.

8. Motorisierter Kehrer (18) nach Anspruch 7, **dadurch gekennzeichnet, dass** er einen Zeitgeber umfaßt, um während des Filtervorgangs ein Startsignal für eine voreingestellte Anzahl von Teildrehungen an den Motor (8) zu senden.

9. Motorisierter Kehrer (18) nach einem der vorstehenden Ansprüche, **dadurch gekennzeichnet, dass** wenigstens ein Korridor zur Beseitigung der vom Motor (19) erzeugten heißen Luft bereitgestellt ist, der bezüglich der Antriebsposition am hinteren Teil endet.

10. Motorisierter Kehrer (18) nach Anspruch 9, **dadurch gekennzeichnet, dass** der Motor (19) und das Filter (15) im Innern eines einzigen Fachs (22) untergebracht sind.

11. Motorisierter Kehrer (18) nach Anspruch 9, **dadurch gekennzeichnet, dass** das Filter (15) außerhalb des Fachs (22) untergebracht ist.

## Revendications

1. Balayeuse motorisée (18) équipée d'un filtre (15) comprenant un élément filtrant (1), de forme sensiblement cylindrique et plié en accordéon pour former une pluralité d'ailettes, d'un aspirateur (2) et d'une chambre basse pression (4) pour la collecte de poussière, dans laquelle une poignée est prévue qui met lesdites ailettes de l'élément filtrant (1) en mouvement par rapport à au moins un batteur ou un peigne rigide ou semi-rigide (7) interagissant avec les ailettes, de sorte à extraire la poussière dudit élément filtrant par la flexion puis le retour élastique en position normale desdites ailettes, **caractérisée en ce que** ladite poignée (9) est reliée à l'élément filtrant (1) de telle sorte à permettre à la fois la rotation manuelle de l'élément filtrant (1) et son extraction de la machine.

2. Balayeuse motorisée (18) selon la revendication 1, **caractérisée en ce que** l'élément filtrant (1) a un axe de rotation dans une position sensiblement horizontale et est mis en rotation par un moteur (8) de sorte que les ailettes de l'élément filtrant (1) frappent contre au moins un peigne rigide ou semi-rigide (7).

3. Balayeuse motorisée (18) selon la revendication 1, **caractérisée en ce que** l'élément filtrant cylindrique a un axe sensiblement vertical et est dans une position fixe pendant que ledit moteur (8) met en rotation un cadre sur lequel au moins deux peignes rigides ou semi-rigides (7) sont solidairement fixés.

4. Balayeuse motorisée (18) selon la revendication 3, **caractérisée en ce que** ledit cadre rotatif est rattaché à ladite poignée (9) pour permettre une rotation manuelle et une extraction de l'ensemble constitué par ledit cadre et ledit élément filtrant cylindrique.

5. Balayeuse motorisée (18) selon l'une quelconque des revendications précédentes, **caractérisée en ce qu'**elle comprend deux éléments filtrants (1) disposés de manière parallèle et équipés d'un aspirateur commun (2) et des dispositifs (14, 14') pour isoler alternativement l'un des deux éléments filtrants (1) du flux d'air aspiré.

6. Balayeuse motorisée (18) selon l'une quelconque des revendications précédentes, **caractérisée en ce qu'**elle comprend un capteur de basse pression (12) qui fournit un signal de départ audit moteur et un signal d'arrêt simultané du flux d'air pour ledit aspirateur (2).

7. Balayeuse motorisée (18) selon l'une quelconque des revendications 1, 2, 5 ou 6, **caractérisée en ce qu'**un dispositif est prévu pour interrompre la rotation de l'élément filtrant (1) par rapport audit peigne (7) dans une position finale distincte de la position initiale.

8. Balayeuse motorisée (18) selon la revendication 7, **caractérisée en ce qu'**elle comprend une minuterie pour transmettre un signal de départ audit moteur (8) pendant l'opération de filtrage pour un nombre de fractions de tour prédéterminé.

9. Balayeuse motorisée (18) selon l'une quelconque des revendications précédentes, **caractérisée en ce qu'**il est prévu au moins un passage se terminant en partie arrière par rapport à la position d'entraînement, pour le rejet de l'air chaud produit par le moteur (19).

10. Balayeuse motorisée (18) selon la revendication 9, **caractérisée en ce que** ledit moteur (19) et le dit filtre (15) sont logés dans un compartiment unique (22).

11. Balayeuse motorisée (18) selon la revendication 9, **caractérisée en ce que** ledit filtre (15) est logé à l'extérieur dudit compartiment (22).
